# EUROPEAN PATENT SPECIFICATION

(11) **EP 1 470 066 B1**
(45) Date of publication and mention of the grant of the patent: **14.03.2007**
(21) Application number: 03706376.5
(22) Date of filing: 23.01.2003
(51) Int. Cl.: B65G 43/08, B65B 57/16

(54) **CONTROL AND MANAGEMENT APPARATUS FOR PRODUCTION AND PACKAGING LINES FOR PAPER ROLLS**
FLUSS STEUER- UND KONTROLL VORRICHTUNG BEI DER HERSTELLUNG UND VERPACKUNG VON PAPIERROLLEN
APPAREIL DE COMMANDE ET DE GESTION POUR LIGNES DE PRODUCTION ET D'EMBALLAGE DE ROULEAUX DE PAPIER

(30) Priority: 31.01.2002 IT BO20020050
(43) Date of publication of application: 27.10.2004
(73) Proprietor: KPL Packaging S.p.A., 40012 Calderara di Reno (IT)
(72) Inventor: CASSOLI, Stefano, I-40033 Casalecchio di Reno (IT); GIULIANI, Nicola, I-40050 CastellO Di Serravalle (IT); SERRA, Giulio, I-40050 Monteveglio (IT)
(74) Representative: Mannucci, Michele
(86) International application number: PCT/EP2003/000666
(87) International publication number: WO 2003/064298

(56) References cited:
- EP-A- 0 654 408
- EP-A- 1 100 722
- EP-A- 1 127 791
- DE-A- 3 742 093
- US-A- 5 170 877

## Description

Harmonisation systems are known for optimising the working of a production and packaging line for paper products (tissue converting and packaging), which make provision via the network for real time control of the optimum speed of all the machines comprising it to ensure a high production for the line. The system gathers status data relevant to the optimisation software from all the machines and responds immediately to any change, calculating and relaying to the machines the appropriate speed for the changed conditions. The system allows all the machines in the line to operate continuously and to achieve dynamic control of the line itself so as to achieve always the maximum achievable productive flow that is compatible with the constraints and the status of the different machines, making best use of the accumulation capacity of the magazine and, if required, redistributing the flows over the available routes.

Document EP 1 127 791 A1 discloses an apparatus and a method for defining the operation of a plant for producing conveying and packaging articles according to the preamble of claim 1. The plant comprises: an apparatus for forming articles positioned upstream, a machine for packaging said articles positioned downstream and an apparatus for conveying said articles between said forming apparatus and said packaging apparatus. The method and the plant provide that, through a central control unit of the plant, starting from predefined setting data, operating parameters of the sections of the plant are determined.

Document EP 1 100 722 A1 discloses an apparatus and method for conveying items comprising a line for transporting said items from a machine situated upstream, which advances and transfers said items at a predetermined speed to a utilization situated downstream. At least in the initial part of the said line the speed of advance of the items is maintained equal to the speed of advance and transfer of the working machine. Said items are advanced in longitudinal groups or trains of items, such that, in each group or train of items, said items are longitudinally approached to each other.

Harmonisation systems for optimising the operation of two or more lines operating in the same facility and producing products of the same type, e.g. paper rolls, and comprising at least appropriate rewinding machines with the relevant accumulation magazine, with related cutters and related packaging machines are not known. The invention concerns a system for harmonising the operation of such a composite plant characterised by comprising below the cutters linked to the two magazines which collect the paper rods produced by the rewinding machines and any flow splitting equipment, which, for example, divides the flow of products exiting the cutters into two. A flow of products originating from any flow splitter linked to a magazine and a flow of products originating from any flow splitter linked to another magazine reach a flow adder which performs the inverse function of joining together in one flow the two product streams of different origins to feed them to a packaging machine which is thus shared by the two production lines. The packaging phase comprises one or more machines shared by the two production lines and also comprises other machines fed singly from other product flows generated by any flow splitting equipment mentioned above or directly from cutters linked to the two magazines. The status of the various machines making up the two working lines is monitored by an electronic control unit (which can be programmed and interrogated via appropriate means), which is in charge of harmonising the entire plant's working at maximum output and works with the following logic. If slowdowns or stoppages occur in some of the packaging machines, the slowed down flow can be diverted, via the flow splitter above these machines, to other stand-alone or shared packaging machines, or if effecting such a switching is impossible, via the shared and/or stand-alone machines, it may be enabled to take rods from the magazine which would otherwise tend to fill up and the taking of rods from the other magazine may be proportionately reduced so that the two magazines tend to fill up at to a roughly equal quantity. Under normal or peak conditions the capacity of the packaging machines is conveniently greater than that of the rewinding machines so that upon the resumption of normal working conditions in the packaging machines, the entire packaging system may be operated at peak speed to eliminate the build-ups of rods caused earlier in the two magazines and when the level of rods in the latter reaches minimum of average pre-set values, the speeds of the various packaging machines are controlled to reduce and adapt them to running conditions, all to obtain an operating output from the entire plant with a high value that cannot be affected drastically and directly be final fluctuations in packaging as nevertheless happens with the known technique.

Major characteristics of the invention and the benefits arising therefrom will seem more evident from the following description of a possible form for its implementation illustrated purely by way of example and non-restrictively in the figures in the two attached sheetss of drawings in which:
Figure 1 shows a block diagram of the plant formed by two complete production and packaging lines for paper products and laid out for the automatic harmonisation and control of operating output;
Figures 2 and 3 are side and schematic views of possible implementations of the flow adder equipment working above the packaging machines shard by the two production lines.

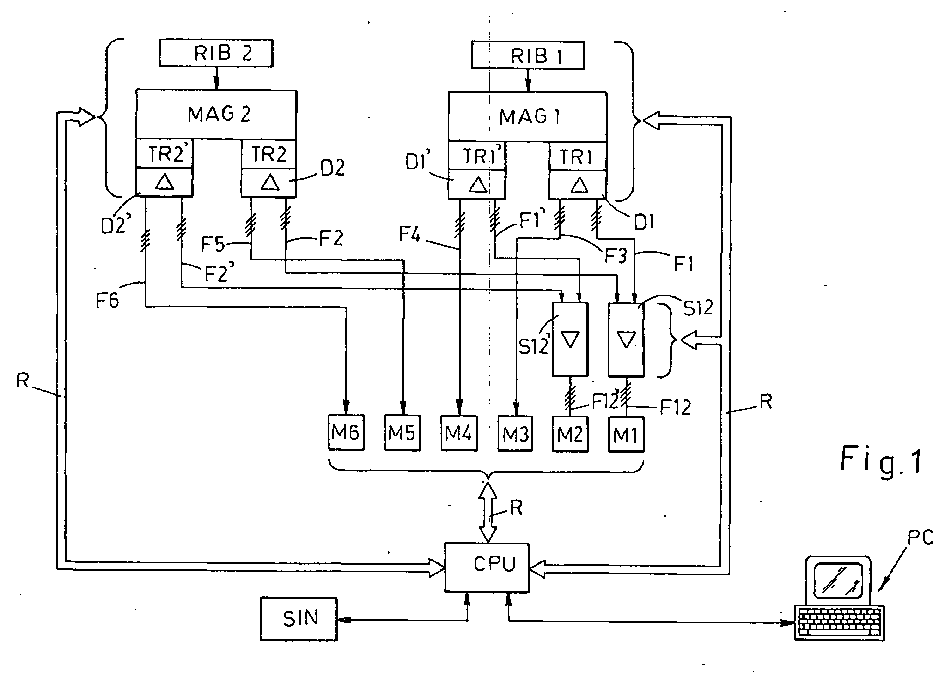

In Figure 1 the rewinders which unwind the paper material from large diameter reels produced by an upstream unit (not shown) and which produce rods of the same axial length as the said reel and the diameter of the paper reels to be packaged are shown with RIB1 and RIB2. The rods produced by the units RIB1 and RIB2 are placed in the respective build-up magazines MAG1 and MAG2 downstream of which operate, for example, pairs of cutters TR1, TR1' and TR2, TR2', each of them of four track type. The cutters have the function of splitting the rods by transverse cuts to form the paper reels. A four-track cutter executes a cutting operation simultaneously on four parallel and adjoining paper rods, from which the so many flows of reels emerge. Downstream of the cutters provision is made for any flow splitters D1, D1' and D2, D2' which make provision for dividing the flows of reels generated by these cutters into two, for example. These devices could be of the type described in, for example, Italian patent application no. TO99A-794 owned by the same applicant or could be of any other suitable type. The four flows of reels products by the cutters are converted into eight flows sub-divided into groups of four and superimposed on each other, for example. The flows F1, F3, each with four rows of reels, exit from the splitter D1: the splitter D1' generates similar flows F1', F4; the splitter D2 generates the flows F2, F5 and the splitter D2' generates the flows F2' and F6.

The flows F3, F4, F5 and F6 are fed singly to respective packaging units M3, M4, M5 and M6. The flows F1 and F2 are conveyed to a flow adder device S12 which performs the inverse operation of the splitting equipment D1 and other, so that the products of the flow F1 are cyclically inserted into those of the flow F2 to produce upon exit one flow F12 composed of only four lines of reels, which is fed to a packaging unit M1. Likewise the flows F1' and F2' are fed to a flow adder device S12' whose four line exit F12' is fed to a packaging unit M2.

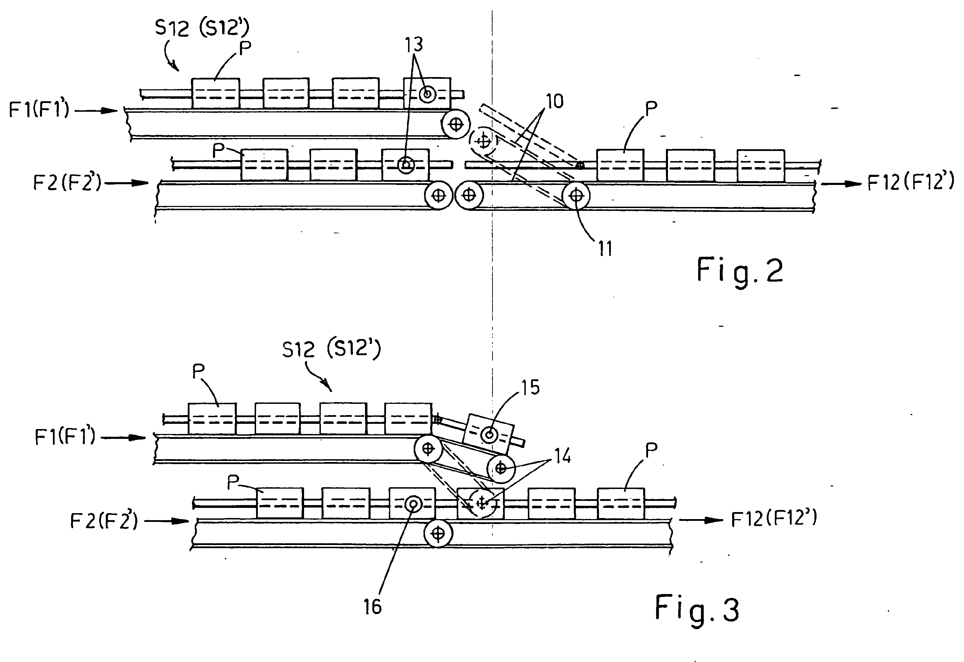

The adders S12 and S12' may be equipped, for example, with an oscillating switch 10 as in Figure 2, with four adjacent lines joined transversely in 11 to the downstream line F12 or F12' and which is cyclically surveyed by suitable means for two different levels in the upstream lines F1 and F2 or those of F1' and F2' to take up alternately the reels P from the two lines placed at different levels and equipped with known means for guiding the said reels. Suitable stoppage equipment 13 is provided to stop cyclically the flow of product P on the tracks of the feed line which is alternately inactive. Otherwise, as shown in the variant in Figure 3, the downstream line F12' or F12' may be aligned with the upstream line F2 or F2' placed at a lower level, whilst the other upstream line F1, F1' (which is placed at a higher level) has placed at its end a feeder 14 inclined downwards formed, e.g., by a conveyor belt which converges with the lower line and which is normally inactive and remote therefrom to allow the free flow of product P emerging from the lower line F2, F2' towards the downstream line F12, F12'. Alternate operating equipment 15 and 16 is provided to stop cyclically the flow of product P on the four tracks of the above-mentioned conveyor 14 or on those of the lower upstream line F2, F2'. When the equipment 15 is activated, the other 16 is inactive and the product moves freely from F2 or F2' to F12 or F12'. However, when the stoppage equipment 16 is activated, that of 15 is deactivated and means are provided to activate the inclined conveyor 14 and possibly to move it slightly downwards and bring it closer to the lower line F12 or F12' to feed it with any products originating from the upper line F1 or F1'.

A control and processing unit CPU equipped with appropriate software is connected via the networks R to the PLCs (programmable logic controllers) of the various operating units comprising the two working lines as described to monitor the status of these units to be enable it by working to change the working conditions as stated above, this CPU being connected to a programming and control unit PC and possibly to a synoptic control board SIN showing the operational status of and any difficulties with the various operating units of the plant.

The capacity of the packaging machines in peak working condition is preferably such that it takes up with an adequate margin of excess all the production of the rewinders RIB1 and RIB2.

To understand better the aims of the invention, reference will now made, by way of purely non-restrictive examples, to some possible working parameters for the plant's various operating units. The operating capacity of each of the rewinders RIB1 and RIB2 may be equivalent to, for example, some **923** reels per minute as a peak speed and to some **738** reels per minute as an average speed, whilst the operational speed of the pairs of cutters TR1, TR1' or TR2, TR2' is approximately **980** reels per minute as a peak speed and approximately **823** reels per minutes as an average speed; these values are all greater than those given previously for the rewinders. The overall operating capacity of the cutters is (980 x 2) = **1,960** reels per minute as a peak speed and (823 x 2) = **1,646** reels per minute as an average speed.

The following table sets out the possible working characteristics of the packaging units M1 to M6, correlated with those of the upstream equipment previously mentioned.

| | **Reels per package** | **Peak speed** | **Peak production** | **Normal production** | **Average production** |
|---|---|---|---|---|---|
| **M1** | ***4*** | ***100*** | **400** | **378** | **336** |
| **M2** | ***4*** | ***100*** | **400** | **378** | **336** |
| **M3** | ***4*** | ***100*** | **400** | **377** | **336** |
| **M4** | ***4*** | ***100*** | **400** | **377** | **336** |
| **M5** | **1** | ***180*** | **180** | **170** | **151** |
| **M6** | ***1*** | ***180*** | **180** | **170** | **151** |
| **Total** | | | **1,960** | **1,850** | **1,646** |

Via the network connections R the CPU senses the status of the rewinders RIB1 and RIB2 and takes steps to adapt to this status and automatically harmonise the working of all the plant's components to allow the maximum take-up by the packaging machines of the reels produced and to act in such a way that, when an excess of production from the rewinders occurs, causing poor working of the equipment downstream, this excess is equally distributed between the two magazines MAG1 and MAG2.

For example: to handle peak production of 980 reels (these figures are henceforth always taken to be referring to the minute) originating from each set of cutters of the two lines, it is assumed, for example, that at the adder S12 200 reels from the flow F1 join with 200 reels from the flow F2, that at the adder S12' 200 reels from the flow F1' join with another 200 reels from the flow F2' with the consequent feeding of 400 reels to each of the packaging machines M1 and M2. 400 reels from the flow F3 are supplied to packaging machine M3, 400 reels from the flow F4 are supplied' to packaging machine M4, 180 reels from the flow F5 are supplied to packaging machine M5 and 180 reels from the flow F6 are supplied to packaging machine F6. When the level of rods in the magazines reaches a pre-set level, the CPU automatically adjusts the working of the various units of the plant to the changed conditions taking the overall production of the packaging machines from the peak level of some 1,960 reels, e.g. to the normal working value of some 1,850 reels per minute mentioned above, sufficient to absorb the average production of the rewinders.

If production slowdowns occur in the machines M1 and/or M2 which are shared by the magazines MAG1 and MAG2, the fall in take-up affects both magazines, since flows of product from both magazines reach the adders S12, S12'. The example considered is optimal since flows containing identical quantities of product reach the adders, but it is understood that this condition is not strictly necessary for the correct operation of the plant and so the shared machines can be fed with flows supplying different quantities of product. Having the ability, the CPU will nevertheless take steps to share at least part of the lost take-up from machines M1 and M2 with machines M3, M5 or M2, M4. However, if one of the non-shared machines has a problem, e.g. M6 which affects only magazine MAG2, the lost flow F6 which was being taken up by it can be diverted in part to the flow F2' going to the shared machine M2 and may be partly taken up indirectly by an increased production from the cutter TR2 to increase the flows F2 and/or F5 running to machine M1 or to machine M5. However, if such a compensation is not possible, or in combination with this, the flow F2' running to the shared machine M2 may be increased and the flow F1' originating from the magazine MAG1 may be reduced proportionately, so that the slowdown in production is distributed evenly between the plant's two magazines. When normal operating conditions for the packaging machines return, the CPU will take steps to get the system going again at the peak or normal speeds stated as examples in the table on page 8 [of the Italian original] to eliminate the excesses built up by the magazines until they reach a minimum or pre-set average value. It is evident that together with the packaging machines, the CPU will take steps to change and harmonise the working of all the machines below the rewinders RIB1 and RIB2, which are assumed to be the primary entities to whose status that of all the other machines in the plant must be adapted. It is evident that the consequent increase in the filling time of the magazines, now shared, will be quite simply greater than the resumption times for normal packaging conditions and that the plant's output will therefore be higher and, under the best conditions, potentially immune to fluctuations in packaging behaviour.

The CPU will be equipped with software suitable for the purposes outlined above and which can be easily produced by engineers of that field. Details for the production of this CPU, of any synoptic control board SIN and the PC unit are omitted from the description since-these are also capable of being known by engineers in that field.

## Claims

1. Apparatus for the automatic control and management of two or more production and packaging lines (RIB1, RIB2) for paper reels or other paper products with similar characteristics to balance out and maintain at high levels the outputs of the lines when operational breakdowns occur in any machines, particularly of the final packaging stage, **characterised in that** the flows of product, generated by cutters (TR1, TR1', TR2, TR2') which are supplied by magazines (MAG1, MAG2) which are supplied of paper rods produced by rewinders (RIB1, RIB2), are partly fed directly to respective packaging machines (M3, M4, M5, M6) and partly fed to at least one flow adder device (S12), which collects two incoming flows each originating from two different rewinders (RIB1, RIB2) into a single flow and supplies the product to a corresponding packaging machine(M1) which is shared by the magazines (MAG1, MAG2) of the two rewinders (RIB1, RIB2) in such a manner that, in the event of such a machine (M1) slowing or shutting down, the missing flow of products taken up by it, requiring an operational slowdown of the cutters, results to a distributed build-up of rods in both magazines (MAG1, MAG2) of the two lines or in such a manner that it is possible via this shared machine (M1), to take up from both magazines (MAG1, MAG2) the excess production of the rewinders (RIB1, RIB2) caused by the operational slowdown or shutting down of any of the packaging machines (M3, M6) fed directly by a cutter (TR1, TR1', TR2, TR2').

2. Apparatus in accordance with claim 1), **characterised by** comprising a plurality of flow adder devices (S12, S12') which feed respective packaging machines (M1, M2) which are shared by two magazines (MAG1, MAG2) of two production lines.

3. Apparatus in accordance with one or more of the previous claims, **characterised by** comprising downstream the cutters (TR1, TR1', TR2, TR2') flow splitter equipment (D1, D1', D2, D2'), which, for example, split into two the flows of product which are fed to the packaging machines, partly directly and partly via the flow adder device or devices (S12, S12').

4. Apparatus in accordance with one or more of the previous claims,
**characterised by** comprising a processing unit (CPU) which via the network (R) monitors the status of the rewinders (RIB1, RIB2) of the two lines, taking said status as its reference parameter to which the operation of all the downstream machines must be adapted, the condition of said downstream machines being monitored and adjusted via the network (R) by the same processing unit (CPU) which is connected to a programming and control unit (PC) the whole in such a manner that if slowdowns occur in any of the packaging machines (M3-M6), the above-mentioned processing unit takes steps to divert, via any flow splitter equipment located above the affected machine, the product flow to other singly fed or shared packaging machine (M1-M6) and/or takes steps to balance the operation of any packaging machines to increase the take-up of rods from the magazine which would otherwise tend to fill up and takes steps to reduce proportionately the take-up of rods from the other magazine so that the two magazines tend to fill up at largely equal rates, the maximum capacity of all the plant's machined being greater than that of the rewinders (RIB1, RIB2), so that upon the resumption of normal operating conditions for the packaging machines, the said control unit (CPU) may arrange for the machines to operate at peak speed to eliminate the build-ups of rods caused previously in the two magazines, means being provided so that when the level of rods therein reaches pre-set minimum or average values, the speeds of the machines downstream is ordered to reduce and adjust to normal working conditions.

5. Apparatus in accordance with one or more of the previous claims, in which means are provided to act so that the flows of product fed to the adder device (S12) contain identical or different quantities of product, as required.

6. Apparatus in accordance with one or more of the previous claims, **characterised by** the fact that to each magazine (MAG1, MAG2), two cutters (TR1, TR1', TR2, TR2') are attached, and that attached to the cutters there are respective flow splitters (D1, D1', D2, D2'), from each of which two flows of products emerge, where each flow has an equal or different quantity of products according to the operational requirements of the machines downstream, provision being made that one of the flows (F1, F1') emerging from the splitter equipment linked to one magazine (MAG1) and one of the flows (F2, F2') emerging from the splitter equipment linked to the other magazine (MAG2) together (F1, F2 and F1', F2') join the two relevant adder devices (S12, S12'), each of which changes the two input product flows into a single output flow (F12, F12') which is fed to the packaging machines (M1, M2) linked to each of the said adder devices (S12, S12'), while provision is made that the remaining four product flows (F3, F4, F5, F6) generated by the said splitter equipment (D1, D1', D2, D2') supply the relevant packaging machines (M3, M4, M5, M6).

7. Apparatus in accordance with one or more of the previous claims, in which the flow splitter equipments (D1, D1', D2, D2') are of the type in which the two four track flows each generated by these devices so placed one on top of the other or adjacent to each other.

8. Apparatus in accordance with one or more of the previous claims, in which the flow adder devices (S12, S12') are equipped with a variable change unit (10) with four adjoining tracks transversely joined to the output flow line (F12, F12') and which is made to swing by appropriate means and is cyclically joined to two different levels of the input lines (F1, F2, F1', F2'), appropriate stopping means (13) being provided to stop cyclically the flow of product on the feed line which is alternately inactive.

9. Apparatus in accordance with one or more of the previous claims, in which the flow adder devices (S12, S12') provide that the output line (F12, F12') is aligned with one input line (F2, F2') placed at a lower level, while the other input line (F1, F1') which is positioned at a higher level, has abutting with it a feeder (14) inclined downward, which converges with the lower line and which is cyclically activated and lowered to transfer products from the upper input line (F1, F1') to the output line (F12, F12').

## Patentansprüche

1. Vorrichtung für die automatische Steuerung und Kontrolle von zwei oder mehr Produktions- und Verpackungslinien (RIB1, RIB2) für Papierrollen oder andere Papiererzeugnisse mit ähnlichen Merkmalen, um die Ausgangsleistungen der Linien auszugleichen und auf hohen Niveaus aufrechtzuerhalten, wenn Betriebsausfälle bei Maschinen auftreten, besonders der abschließenden Verpackungsphase, **dadurch gekennzeichnet, dass** die Flüsse des Erzeugnisses, erzeugt durch Schneidwerkzeuge (TR1, TR1', TR2, TR2'), die von Magazinen (MAG1, MAG2) zugeführt werden, denen von Wiederaufwicklern (RIB1, RIB2) erzeugte Papierstangen zugeführt werden, teilweise direkt zu entsprechenden Verpackungsmaschinen (M3, M4, M5, M6) zugeführt werden und teilweise zumindest einer Flussvereinigungsvorrichtung (S12) zugeführt werden, welche zwei ankommende Flüsse, die jeweils aus zwei unterschiedlichen Wiederaufwicklern (RIB1, RIB2) stammen, zu einem einzigen Fluss zusammenführt und das Erzeugnis einer entsprechenden Verpackungsmaschine (M1) zuführt, die gemeinsam von den Magazinen (MAG1, MAG2) der zwei Wiederaufwickler (RIB1, RIB2) genutzt wird, dergestalt, dass, falls eine solche Maschine (M1) langsamer läuft oder zum Stillstand kommt, der von ihr nicht aufgenommene Fluss von Erzeugnissen, der eine Verlangsamung des Betriebs der Schneidwerkzeuge erforderlich macht, zu einer aufgeteilten Ansammlung von Stangen in beiden Magazinen (MAG1, MAG2) der zwei Linien in einer solchen Weise führt, dass es möglich ist, über diese gemeinsam genutzte Maschine (M1), von beiden Magazinen (MAG1, MAG2) die überschüssige Produktion der Wiederaufwickler (RIB1, RIB2) aufzunehmen, die durch die Betriebsverlangsamung oder den Stillstand einer der Verpackungsmaschinen (M3, M6) verursacht wird, die direkt durch ein Schneidwerkzeug (TR1, TR1', TR2, TR2') gespeist werden.

2. Vorrichtung nach Anspruch 1, **dadurch gekennzeichnet, dass** sie eine Vielzahl von Flussvereinigervorrichtungen (S12, S12') umfasst, die entsprechende Verpackungsmaschinen (M1, M2) speisen, welche von zwei Magazinen (MAG1, MAG2) von zwei Produktionslinien gemeinsam genutzt werden.

3. Vorrichtung nach einem oder mehr der vorangehenden Ansprüche, **dadurch gekennzeichnet, dass** sie nachgelagert die Schneidwerkzeuge (TR1, TR1', TR2, TR2'), die Flusstrennungsvorrichtungen (D1, D1', D2, D2') umfasst, welche zum Beispiel die Erzeugnisflüsse in zwei Flüsse teilen, welche den Verpackungsmaschinen, entweder zum Teil direkt oder zum Teil über die Flussvereinigervorrichtung oder -vorrichtungen (S12, S12') zugeführt werden.

4. Vorrichtung nach einem oder mehr der vorangehenden Ansprüche, **dadurch gekennzeichnet, dass** sie eine Verarbeitungseinheit (CPU) umfasst, welche über das Netz (R) den Status der Wiederaufwickler (RIB1, RIB2) der zwei Linien überwacht und diesen Status als ihren Bezugsparameter nimmt, an welchen der Betrieb aller nachgelagerten Maschinen angepasst werden muss, wobei der Zustand der nachgelagerten Maschinen über das Netzwerk (R)durch die gleiche Verarbeitungseinheit (CPU) überwacht und angepasst wird, die mit einer Programmier- und Steuereinheit (PC) verbunden ist, und all dies dergestalt, dass, wenn Verlangsamungen bei einer der Verpackungsmaschinen (M3-M6) auftreten, die vorgenannte Verarbeitungseinheit veranlasst, dass über eine Flusstrennungsvorrichtung, die oberhalb der betroffenen Maschine positioniert ist, der Erzeugnisfluss zu einer anderen Verpackungsmaschine mit Einzelzuführung oder zu einer gemeinsam genutzten Verpackungmaschine (M1-M6) umgeleitet wird und/oder veranlasst, dass der Betrieb von Verpackungsmaschinen ausgeglichen wird, um die Aufnahme von Stangen aus dem Magazin zu erhöhen, das ansonsten dazu tendieren würde, sich aufzufüllen und sie veranlasst, dass die Aufnahme von Stangen aus dem anderen Magazin anteilmäßig so reduziert wird, dass die zwei Magazine dahin tendieren, sich mit weitgehend gleichen Geschwindigkeiten aufzufüllen, wobei die maximale Kapazität aller Maschinen der Anlage größer ist als diejenige der Wiederaufwickler (RIB1, RIB2), so dass bei der Wiederaufnahme normaler Betriebsbedingungen für die Verpackungsmaschinen die Steuereinheit (CPU) veranlassen kann, dass die Maschinen mit Spitzengeschwindigkeit arbeiten, um die zuvor in den zwei Magazinen verursachte Auffüllung zu eliminieren, wobei eine Einrichtung bereitgestellt wird, damit, wenn das Niveau von Stangen in diesen die vorbestimmten Mindestwerte oder durchschnittlichen Werte erreicht, veranlasst wird, dass sich die Geschwindigkeiten der nachgelagerten Maschinen verringern und an die normalen Arbeitsbedingungen anpassen.

5. Vorrichtung nach einem oder mehr der vorangehenden Ansprüche, **dadurch gekennzeichnet, dass** Einrichtungen bereitgestellt werden, um so zu fungieren, dass die der Vereinigungsvorrichtung (S12) zugeführten Erzeugnisflüsse identische oder unterschiedliche Erzeugnismengen, je nach Erfordernis, enthalten.

6. Vorrichtung nach einem oder mehr der vorangehenden Ansprüche, durch die Tatsache **gekennzeichnet**, dass jedem Magazin (MAG1, MAG2) zwei Schneidwerkzeuge (TR1, TR1', TR2, TR2') zugeordnet sind und dass den Schneidwerkzeugen entsprechende Flusstrenner (D1, D1', D2, D2') zugeordnet sind, aus denen jeweils zwei Erzeugnisflüsse hervorgehen, wobei jeder Fluss eine gleiche oder unterschiedliche Menge an Erzeugnissen gemäß den Betriebserfordernissen der nachgeordneten Maschinen enthält, wobei Vorsorge dafür getroffen wird, dass einer der Flüsse (F1, F1'), der aus der Trennvorrichtung hervorgeht, die mit einem Magazin (MAG1) verbunden ist und einer der Flüsse (F2, F2'), der aus der Trennvorrichtung hervorgeht, die mit dem anderen Magazin (MAG2) verbunden ist, sich gemeinsam (F1, F2 und F1', F2') mit den zwei entsprechenden Vereinigungsvorrichtungen (S12, S12') vereinigen, wobei jede derselben die zwei Eingangserzeugnisflüsse zu einem einzigen Ausgangsfluss (F12, F12') ändert, welcher den Verpackungsmaschinen (M1, M2) zugeführt wird, die mit jeder der Vereinigungsvorrichtungen (S12, S12') verbunden sind, wobei Vorsorge dafür getroffen wird, dass die übrigen vier Erzeugnisflüsse (F3, F4, F5, F6), die von der Trennvorrichtung (D1, D1', D2, D2') erzeugt werden, die entsprechenden Verpackungsmaschinen (M3, M4, M5, M6) speisen.

7. Vorrichtung nach einem oder mehr der vorangehenden Ansprüche, **dadurch gekennzeichnet, dass** die Flusstrennvorrichtungen (D1, D1', D2, D2')von der Art sind, bei der die zwei Vierbahnen-Flüsse, die jeweils von diesen Vorrichtungen erzeugt werden, übereinander oder angrenzend aneinander platziert werden.

8. Vorrichtung nach einem oder mehr der vorangehenden Ansprüche, **dadurch gekennzeichnet, dass** die Flussvereinigungsvorrichtungen (S12, S12') mit einer variablen Änderungsvorrichtung (10) ausgestattet sind, mit vier angrenzenden Bahnen, die diagonal mit der Ausgabeflusslinie (F12, F12') verbunden sind und die durch eine geeignete Vorrichtung zum Schwenken gebracht wird und zyklisch mit zwei unterschiedlichen Ebenen der Eingabelinien (F1, F2, F1', F2') verbunden ist, wobei eine geeignete Anhaltevorrichtung (13) bereitgestellt wird, um den Fluss des Erzeugnisses auf der Zufuhrleitung zyklisch zu stoppen, die abwechselnd nicht in Betrieb ist.

9. Vorrichtung nach einem oder mehr der vorangehenden Ansprüche, **dadurch gekennzeichnet, dass** die Flussvereinigungsvorrichtungen (S12, S12') dafür sorgen, dass die Ausgabelinie (F12, F12') mit einer Eingabelinie (F2, F2') ausgerichtet ist, die auf einer niedrigeren Ebene platziert ist, während die andere Eingabelinie (F1, F1'), die auf einer höheren Ebene positioniert ist, angrenzend an diese eine Zuführungsvorrichtung (14) aufweist, die nach unten geneigt ist und mit der unteren Linie zusammenläuft, die zyklisch aktiviert und gesenkt wird, um Erzeugnisse von der oberen Eingabelinie (F1, F1') zur Ausgabelinie (F12, F12') zu übertragen.

## Revendications

1. Appareil de commande et de gestion automatique de deux ou plusieurs lignes de production et d'emballage (RIB1, RIB2) pour des rouleaux de papier ou autres produits en papier avec des caractéristiques similaires, pour équilibrer et maintenir à des niveaux élevés les sorties des lignes lorsque des pannes de fonctionnement surviennent dans n'importe quelle machine, particulièrement de l'étape finale d'emballage, **caractérisé en ce que** les débits de produit, générés par des coupeuses (TR1, TR1', TR2, TR2') qui sont alimentées par des magasins (MAG1, MAG 2) qui sont alimentés par des baguettes de papier produites par des débobineuses-rebobineuses (RIB1, RIB2), sont en partie directement acheminés vers des machines d'emballage respectives (M3, M4, M5, M6) et en partie vers au moins un dispositif de regroupement de débit (S12) qui réunit les deux débits rentrants, dont chacun provient de deux débobineuses-rebobineuses différentes (RIB1, RIB2), en un débit unique et qui achemine le produit vers une machine d'emballage correspondante (M1) qui est partagée par les magasins (MAG1, MAG2) des deux débobineuses-rebobineuses (RIB 1, RIB2), de telle manière que dans le cas d'un ralentissement ou d'un arrêt d'une telle machine (M1), le débit manquant des produits acheminés par celle-ci requérant un ralentissement opérationnel des découpeuses, entraîne une accumulation distribuée de baguettes dans les deux magasins (MAG1, MAG2) des deux lignes, de telle manière qu'il soit possible, par l'intermédiaire de cette machine partagée (M1) de prélever depuis les deux magasins (MAG1, MAG2) la production excédentaire des débobineuses-rebobineuses (RIB1, RIB2) entraînée par le ralentissement ou la panne de fonctionnement de n'importe laquelle des machines d'emballage (M3, M6) directement alimentées par une coupeuse (TR1, TR1', TR2, TR2').

2. Appareil selon la revendication 1, **caractérisé en ce qu'**il comprend une pluralité de dispositifs de regroupement de débit (S12, S12') qui alimente des machines d'emballage respectives (M1, M2) qui sont partagées par deux magasins (MAG1, MAG2) de deux lignes de production.

3. Appareil selon une ou plusieurs des revendications précédentes, **caractérisé en ce qu'**il comprend en aval les coupeuses (TR1, TR1', TR2, TR2') un équipement de partage de débit (D1, D1', D2, D2') qui, par exemple, partage en deux les débits de produit qui sont acheminés vers les machines d'emballage, en partie directement et en partie par l'intermédiaire du dispositif ou des dispositifs de regroupement de débit (S12, S12').

4. Appareil selon une ou plusieurs des revendications précédentes, **caractérisé en ce qu'**il comprend une unité de traitement (CPU) qui contrôle, par l'intermédiaire du réseau (R) le statut des débobineuses-rebobineuses (RIB1, RIB2) des deux lignes, prenant ce statut comme son paramètre de référence auquel le fonctionnement de toutes les machines d'aval doit être adapté, la condition desdites machines d'aval étant contrôlée et réglée par l'intermédiaire du réseau (R) par la même unité de traitement (CPU) qui est connectée à une unité de commande et de programmation (PC) le tout de manière à ce que si des ralentissements surviennent dans n'importe laquelle des machines d'emballage (M3 à M6), l'unité de traitement susmentionnée prend des mesures pour faire dévier, par l'intermédiaire de n'importe quel équipement de partage de débit positionné au-dessus de la machine affectée, le débit de produits vers une autre machine d'emballage alimentée séparément ou partagée (M1 à M6), et/ou elle prend des mesures pour équilibrer le fonctionnement de n'importe quelle machine d'emballage afin d'augmenter la collecte de baguettes depuis le magasin qui tendrait sinon à se remplir, et elle prend des mesures pour réduire proportionnellement la collecte de baguettes depuis l'autre magasin, de manière à ce que les deux magasins tendent à se remplir à des vitesses largement égales, la capacité maximum de toutes les machines de l'installation étant supérieure à celle des débobineuses-rebobineuses (RIB1, RIB2), de sorte que suite à la reprise des conditions de fonctionnement normales pour les machines d'emballage, ladite unité de traitement (CPU) puisse faire en sorte que les machines fonctionnent à la vitesse de pointe pour éliminer les accumulations de baguettes provoquées précédemment dans les deux magasins, des moyens étant fournis pour qu'au moment où le niveau de baguettes dans ceux-ci atteint les valeurs minimales ou moyennes préétablies, les vitesses des machines en aval soient commandées de façon à se réduire et à s'adapter aux conditions normales de fonctionnement.

5. Appareil selon une ou plusieurs des revendications précédentes, dans lequel des moyens sont fournis pour agir de manière à ce que les débits de produit acheminé vers le dispositif de regroupement (S 12) contiennent des quantités identiques ou différentes de produit, comme requis.

6. Appareil selon une ou plusieurs des revendications précédentes, **caractérisé par le fait que** deux coupeuses (TR1, TR1', TR2, TR2') sont fixées à chaque magasin (MAG1, MAG2), et que des dispositifs de partage de débit (D1, D1', D2, D2') sont fixés aux coupeuses, à partir de chacun desquels émergent deux débits de produit, chaque débit ayant une quantité égale ou différente de produits selon les exigences opérationnelles des machines situées en aval, avec la prévision qu'un des débits (F1, F1') émergeant de l'équipement de partage de débit relié à un magasin (MAG1) et un des débits (F2, F2') émergeant de l'équipement de partage de débit relié à l'autre magasin (MAG2) rejoignent ensemble (F1, F2 et F1', F2') les deux dispositifs de regroupement respectifs (S12, S12'), dont chacun change les deux débits entrants de produit en un seul débit de sortie (F12, F12') qui est acheminé vers les machines d'emballage (M1, M2) reliées à chacun desdits dispositifs de regroupement (S12, S12'), tandis qu'il est prévu que les quatre débits de produit restants (F3, F4, F5, F6) générés par ledit équipement de partage (D1, D1', D2, D2') alimentent les machines d'emballage respectives (M3, M4, M5, M6).

7. Appareil selon une ou plusieurs des revendications précédentes, dans lequel les équipements de partage de débit (D1, D1', D2, D2') sont du type dans lequel les deux débits à quatre voies générés chacun par ces dispositifs, soient positionnés l'un au-dessus de l'autre ou de manière mutuellement adjacente.

8. Appareil selon une ou plusieurs des revendications précédentes, dans lequel les dispositifs de regroupement de débit (S 12, S12') sont équipés d'une unité de permutation variable (10) avec quatre voies attenantes transversalement reliées à la ligne de débit de sortie (F12, F12') et qui est entraînée à osciller par des moyens appropriés, et qui rejoint cycliquement deux niveaux différents des lignes d'entrée (F1, F1', F2, F2'), des moyens d'arrêt appropriés (13) étant fournis pour arrêter cycliquement le débit de produit sur la ligne d'alimentation qui est alternativement inactive.

9. Appareil selon une ou plusieurs des revendications précédentes, dans lequel les dispositifs de regroupement de débit (S12, S12') assurent que la ligne de sortie (F12, F12') est alignée avec une ligne d'entrée (F2, F2') positionnée à un niveau inférieur, tandis que l'autre ligne d'entrée (F1, F1') qui est positionnée à un niveau supérieur, entre en butée avec un dispositif d'alimentation (14) incliné vers le bas, qui converge avec la ligne inférieure et qui est actionné et abaissé périodiquement pour transférer des produits depuis la ligne d'entrée supérieure (F1, F1') vers la ligne de sortie (F12, F12').
